**Europäisches Patentamt**

**European Patent Office**

**Office européen des brevets**

(19)

(11) Veröffentlichungsnummer: **0 186 777**
**B1**

(12) # EUROPÄISCHE PATENTSCHRIFT

(45) Veröffentlichungstag der Patentschrift:
**30.03.88**

(51) Int. Cl.⁴: **F 24 D  3/00,** F 24 D  19/10

(21) Anmeldenummer: **85114894.0**

(22) Anmeldetag: **25.11.85**

(54) **Verfahren zum Betreiben einer bivalenten Heizungsanlage.**

(30) Priorität: **07.12.84  DE 3444706**

(43) Veröffentlichungstag der Anmeldung:
**09.07.86 Patentblatt 86/28**

(45) Bekanntmachung des Hinweises auf die Patenterteilung:
**30.03.88 Patentblatt 88/13**

(84) Benannte Vertragsstaaten:
**AT CH DE FR IT LI SE**

(56) Entgegenhaltungen:
**EP - A - 0 108 699**
**DE - A - 3 104 224**

(73) Patentinhaber: **Siemens Aktiengesellschaft Berlin und München, Wittelsbacherplatz 2, D-8000 München 2 (DE)**

(72) Erfinder: **Nordhausen, Jürgen, Lindenstasse 16, D-8521 Langensendelbach (DE)**
Erfinder: **Ramming, Erich, Eichberg 11, D-8653 Mainleus (DE)**

## Beschreibung

Die Erfindung bezieht sich auf ein Verfahren zum Betreiben einer bivalenten Heizungsanlage nach dem Oberbegriff des Patentanspruches.

Es ist bereits ein Verfahren zum Betreiben einer bivalenten Heizungsanlage der im Oberbegriff des Patentanspruches angegebenen Gattung bekannt. Das bekannte Verfahren läuft so ab, dass die weitere Wärmequelle, zum Beispiel ein Öl- oder Gas gefeuerter Heizkessel, in den Heizkreis einbezogen wird, wenn ein vom Differenztemperaturregler über die Temperaturfühler festgestellter Temperaturgleichstand zwischen der Vorlaufleitung und dem Vorlaufstrang besteht. Verfahrensschritte, mit denen der Arbeitsanteil der weiteren Wärmequelle minimal gehalten wird und mit denen sichergestellt ist, dass die Wärmepumpe ganz oder nahezu immer die Grundlast der Heizungsanlage deckt, sind nicht vorgesehen (DE-A-3 104 224).

Aufgabe der Erfindung ist es, das Verfahren zum Betreiben einer bivalenten Heizungsanlage nach dem Oberbegriff des Patentanspruches auf einfache Weise so zu gestalten, dass der Anteil der weiteren Wärmequelle an der Gesamtwärmeerzeugung auf einem besonders kleinen Wert gehalten und mit der Wärmepumpe die Grundlast der Wärmeerzeugung ganz oder nahezu ganz gedeckt wird.

Die gestellte Aufgabe wird erfindungsgemäss durch die im kennzeichnenden Teil des Patentanspruches angegebene Ausbildung gelöst.

Die gefundene Lösung zeichnet sich besonders dadurch aus, dass zur Verwirklichung des Verfahrens keine oder allenfalls nur geringe Veränderungen der bestehenden Heizungsanlage erforderlich sind.

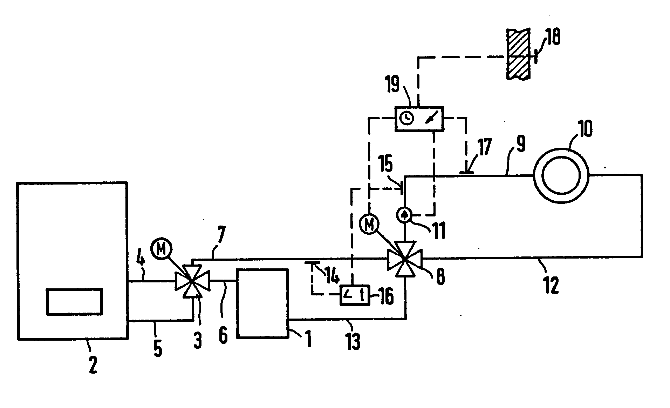

Ein Ausführungsbeispiel der Erfindung wird anhand der Zeichnung beschrieben, die ein Schema einer Heizungsanlage zeigt.

In der Zeichnung ist mit 1 eine Wärmepumpe bezeichnet, die Bestandteil einer bivalent betreibbaren Heizungsanlage ist. Das Bezugszeichen 2 gilt für eine weitere Wärmequelle, beispielsweise einen Öl- oder Gas- gefeuerten Heizkessel. Das Bezugszeichen 3 steht für einen ersten Mehrwegemischer.

An den ersten Mehrwegemischer 3 ist ein von der weiteren Wärmequelle 2 ausgehender Vorlauf 4 angeschlossen, ferner ein zur weiteren Wärmequelle 2 gerichteter Rücklauf 5. Weiter sind an den Mehrwegemischer 3 eine zur Wärmepumpe 1 führende Leitung 6 und eine Vorlaufleitung 7 angeschlossen, die mit einem zweiten Mehrwegemischer 8 in Verbindung steht.

Vom zweiten Mehrwegemischer 8 führt ein Vorlaufstrang 9 zu einem Wärmeabgabesystem 10, zum Beispiel einer Fussbodenheizung.

In den Vorlaufstrang 9 ist eine Umwälzpumpe 11 eingebaut.

Vom Wärmeabgabesystem 10 führt ein Rücklaufstrang 12 zurück zum zweiten Mehrwegemischer 8, der ausserdem über eine Rücklaufleitung 13 mit der Wärmepumpe 1 verbunden ist. An der Vorlaufleitung 7 ist vor dem zweiten Mehrwegemischer 8 ein erster Temperaturfühler 14 angeschlossen.

Ein zweiter Temperaturfühler 15 ist hinter dem zweiten Mehrwegemischer am Vorlaufstrang 9 angeschlossen.

Beide Temperaturfühler 14, 15 sind mit einem Differenztemperaturregler 16 verbunden.

An den Vorlaufstrang 9 ist ferner ein dritter Temperaturfühler 17 angeschlossen, mit dem, wie auch mit einem Aussentemperaturfühler 18, ein Heizungsregler 19 beeinflussbar ist.

Mit dem Heizungsregler 19 ist der zweite Mehrwegemischer 8 in Richtung «Auf» oder «Zu» verstellbar.

Die aus den Bestandteilen 1 - 19 bestehende Heizungsanlage wird wie folgt betrieben:

Wenn der Differenztemperaturregler 16, aufgrund von entsprechenden Signalen des ersten Temperaturfühlers 14 und des zweiten Temperaturfühlers 15 einen unteren Wert einer Temperaturdifferenz zwischen der Vorlaufleitung 7 und dem Vorlaufstrang 9 von beispielsweise 0,5°K feststellt, wird die Wärmepumpe eingeschaltet. Die tatsächlich vom Heizungsregler 19 vorgegebene Temperatur spielt dabei keine Rolle, massgebend ist lediglich die festgestellte Temperaturdifferenz. Ob diese Temperaturdifferenz durch eine Temperatur von beispielsweise 293°K in der Vorlaufleitung 7 und einer Temperatur von 292,5°K im Vorlaufstrang 9 zustande kommt oder durch andere Temperaturen, beispielsweise 290°K vor und 289,5°K hinter dem zweiten Mehrwegemischer 8, ist dabei nicht von Bedeutung.

Die weitere Wärmequelle 2 wird über den Differenztemperaturregler 16 eingeschaltet, wenn nach Ablauf einer vorgegebenen Zeit von beispielsweise drei Stunden nach dem Einschalten der Wärmepumpe 1 der untere Wert der Temperaturdifferenz noch nicht überschritten ist.

Wenn jedoch der untere Wert der Temperaturdifferenz überschritten ist, so ist das ein Zeichen dafür, dass die Wärmepumpe 1 alleine ausreicht, den vom Heizungsregler 19 vorgegebenen Wärmebedarf zu decken und somit weitere Massnahmen unterbleiben können.

Nach dem Einschalten der weiteren Wärmequelle 2 wird der Durchfluss am ersten Mehrwegemischer 3 vom Vorlauf 4 zur Vorlaufleitung 7 solange vergrössert, bis der untere Wert der Temperaturdifferenz überschritten ist.

Einerseits soll der Anteil der zweiten Wärmequelle 2 an der gesamten Wärmeerzeugung so klein als möglich gehalten werden. Andererseits hat jedoch die Vergrösserung des Durchflusses im ersten Mehrwegemischer 3 eine immer grösser werdende Heizleistungsforderung an die weitere Wärmequelle 2 zur Folge. Der Vergrösserung des Durchflusses im ersten Mehrwegemischers 3 ist deshalb eine Grenze gesetzt. Diese Grenze ist dann erreicht, wenn der Differenztemperaturregler 16 einen oberen Wert der Temperaturdifferenz von beispielsweise von 1,5°K feststellt. Dieser obere Wert der Temperaturdifferenz kann auf zweierlei Weise erreicht werden, entweder durch ein auf die zweite Wärmequelle 2 zurückzuführendes höheres Wärmeangebot oder durch eine Erniedrigung des Wärmebedarfs. Im letzteren Falle kann eine höhere Aussentemperatur oder eine vom Betreiber vorgenommene tiefere Einstellung des Heizungsreglers 19 die Ursache sein.

Nach dem Überschreiten des dem Differenztemperaturregler 16 als Grenze gesetzten oberen Wertes der Temperaturdifferenz, wird der Durchfluss im ersten Mehrwegemischer 3 verringert, bis sich eine Unterschreitung des oberen Wertes der Temperaturdifferenz ergibt.

Je nach Wärmebedarf wird der Durchfluss im ersten Mehrwegemischer 3 sodann entweder vergrössert oder verringert womit die Wärmeleistung der weiteren Wärmequelle 2 ständig auf dem Bedarfswert gehalten wird. Ohne Änderung des Wärmebedarfs bleibt der erste Mehrwegemischer 3 jedoch mehr oder minder in seiner Momentanstellung stehen.

Sobald jedoch der erste Mehrwegemischer 3 den Durchfluss sperrt, wird die weitere Wärmequelle 2, nach Ablauf einer vorgegebenen Zeit, abgeschaltet, da nunmehr feststeht, dass die Wärmepumpe 1 alleine ausreicht, den Wärmebedarf zu decken.

Die Wärmepumpe 1 wird abgeschaltet, wenn der erste Mehrwegemischer 3 seine Stellung «Zu» einnimmt und der untere Wert der Temperaturdifferenz überschritten ist.

**Patentanspruch**

Verfahren zum Betreiben einer bivalenten Heizungsanlage, mit den Merkmalen:

a) in einem einen flüssigen Wärmeträger führenden Heizungskreis, der eine Wärmepumpe (1), eine weitere Wärmequelle (2), einen mit der Wärmequelle (1) und der weiteren Wärmequelle (2) in Verbindung stehenden ersten Mehrwegemischer (3), eine sich vom ersten Mehrwegemischer (3) zu einem zweiten Mehrwegemischer (8) erstreckende Vorlaufleitung (7) sowie einen vom zweiten Mehrwegemischer (8) ausgehenden Vorlaufstrang (9) enthält, wird die weitere Wärmequelle (2) eingeschaltet, wenn eine von einem Differenztemperaturregler (16) über zwei Temperaturfühler (14, 15) festgestellte Temperaturdifferenz zwischen der Vorlaufleitung (7) und dem Vorlaufstrang (9) einen vorgegebenen Wert annimmt;
gekennzeichnet durch die Merkmale:

b) die Wärmepumpe (1) wird bei einem unteren Wert der Temperaturdifferenz eingeschaltet;

c) die weitere Wärmequelle (2) wird eingeschaltet, wenn nach Ablauf einer vorgegebenen Zeit nach dem Einschalten der Wärmepumpe (1) der untere Wert der Temperaturdifferenz noch nicht überschritten ist;

d) nach dem Einschalten der weiteren Wärmequelle (2) wird im ersten Mehrwegemischer (3) der Durchfluss von der weiteren Wärmequelle (2) in die Vorlaufleitung (7) solange vergrössert, bis der untere Wert der Temperaturdifferenz überschritten ist;

e) nach dem Überschreiten eines durch Wärmeangebots- oder durch Änderung des Wärmebedarfs sich einstellenden oberen Wertes der Temperaturdifferenz wird der Durchfluss im ersten Mehrwegemischer von der weiteren Wärmequelle (2) in die Vorlaufleitung (2) solange vermindert, bis sich eine Unterschreitung des oberen Wertes der Temperaturdifferenz ergibt;

f) die weitere Wärmequelle (2) wird nach Ablauf einer vorgegebenen Zeit abgeschaltet, wenn der erste Mehrwegemischer (3) seine Stellung «Zu» erreicht hat;

g) die Wärmepumpe (1) wird abgeschaltet, wenn der erste Mehrwegemischer (3) seine Stellung «Zu» einnimmt und der untere Wert der Temperaturdifferenz überschritten ist.

**Claim**

A process for the operation of a two-condition heating installation, comprising the following features:

a) into a heating circuit which conducts a liquid heat carrier and which contains a heat pump (1), a further heat source (2), a first multi-path mixer (3) which is connected to the heat pump (1) and the further heat source (2), an outgoing pipeline (7) which extends from the first multi-path mixer (3) to a second multi-path mixer (8), and an outgoing leg (9) which commences from the second multi-path mixer (8), the further heat source (2) is inserted when a temperature difference between the outgoing pipeline (7) and the outgoing leg (9), which is established by a differential temperature regulator (16) through two temperature sensors (14, 15), assumes a predetermined value;
characterised by the following features:

b) the heat pump (1) is switched on at a lower value of the temperature difference;

c) the further heat source (2) is switched on when, at the end of a predetermined time interval after the switching-on of the heat pump (1), the lower value of the temperature difference has not yet been exceeded;

d) after the switching on of the further heat source (2), the flow from ther further heat source (2) into the outgoing pipeline (7) is increased in the first multi-path mixer (3) until the lower value of the temperature difference is exceeded;

e) after an upper value of the temperature difference is exceeded, which takes place due to a supply of heat, or due to a change in the heat requirement, the flow in the first multi-path mixer from the further heat source (2) into the outgoing pipeline (2) is reduced until the temperature difference falls below the upper value;

f) at the end of a predetermined time interval the further heat source (2) is switched-off when the first multi-path mixer (3) has reached its «off» position;

g) the heat pump (1) is switched-off when the first multi-path mixer (3) assumes its «off» position and the lower value of the temperature difference is exceeded.

**Revendication**

1. Procédé d'exploitation d'une installation de chauffage bivalente, ayant les particularités:

a) dans un circuit de chauffage dans lequel circule un caloporteur liquide et qui contient une pompe à chaleur (1), une source de chaleur supplémentaire (2), un premier mélangeur à plusieurs voies (3) relié à la pompe à chaleur (1) et à la source de chaleur supplémentaire (2), une canalisation d'aller (7) reliant le premier mélangeur (3) à un second mélangeur à plusieurs voies (8), ainsi qu'une ligne d'aller (9) partant du second mélangeur (8), la source de chaleur supplémentaire (2) est mise en marche lorsqu'une différence de température entre la canalisation d'aller (7) et la ligne d'aller (9), différence de température qui est détectée par un régulateur de température différentielle (16) au moyen de deux capteurs de température (14, 15), prend une valeur préfixée; caractérisé en ce que:

b) la pompe à chaleur (1) est mise en marche à une valeur inférieure de la différence de température;

c) la source de chaleur supplémentaire (2) est mise en marche lorsque, à la fin d'un temps préfixé après la mise en marche de la pompe à chaleur (1), la valeur inférieure de la différence de température n'a pas encore été dépassée;

d) après la mise en marche de la source de chaleur supplémentaire (2), le débit de cette source (2) vers la canalisation d'aller (7) dans le premier mélangeur (3) est augmenté jusqu'à ce que la valeur inférieure de la différence de température soit dépassée;

e) après le dépassement d'une valeur supérieure de la différence de température, s'établissant sous l'effet de l'apport de chaleur ou par le changement des besoins en chaleur, le débit de la source de chaleur supplémentaire (2) vers la canalisation d'aller (2) dans le premier mélangeur est réduit jusqu'à ce que la différence de température descende au-dessous de la valeur supérieure de la différence de température;

f) la source de chaleur supplémentaire (2) est arrêtée, au bout d'un temps préfixé, lorsque le premier mélangeur (3) a atteint sa position «fermée»;

g) la pompe à chaleur (1) est arrêtée lorsque le premier mélangeur (3) prend sa position «fermée» et que la valeur inférieure de la différence de température est dépassée.